# FASCICULE DE BREVET EUROPEEN

(11) **EP 3 536 489 B1**
(45) Date de publication et mention de la délivrance du brevet: **04.11.2020**
(21) Numéro de dépôt: 19160538.5
(22) Date de dépôt: 04.03.2019
(51) Int. Cl.: B29C 70/44, B29C 70/46, B29D 99/00, B29K 101/12

(54) **SYSTÈME ET PROCÉDÉ DE FABRICATION DE PIÈCES THERMOPLASTIQUES STRUCTURELLES**
HERSTELLUNGSSYSTEM UND -VERFAHREN VON THERMOPLASTISCHEN STRUKTURTEILEN
SYSTEM AND METHOD FOR MANUFACTURING STRUCTURAL THERMOPLASTIC PARTS

(30) Priorité: 09.03.2018 FR 1852086
(43) Date de publication de la demande: 11.09.2019
(73) Titulaire: Stelia Aerospace, 17300 Rochefort (FR)
(72) Inventeur: DERUELLE, Mr Romain, 80300 ALBERT (FR)
(74) Mandataire: Argyma

(56) Documents cités:
- WO-A1-2015/082813
- WO-A2-2010/118923
- US-A1- 2015 013 894

## Description

### DOMAINE TECHNIQUE GENERAL ET ART ANTERIEUR

La présente invention concerne le domaine de la fabrication de pièces aéronautiques et concerne plus précisément un dispositif de fabrication de pièces thermoplastiques de grandes dimensions destinées à former la structure d'un avion.

Par grandes dimensions, on entend qu'une des dimensions de la pièce aéronautique est supérieure à 5m.

De manière connue, un avion comprend une structure primaire par laquelle transitent les efforts mécaniques et une structure secondaire montée sur la structure primaire. A ce titre, la structure primaire comprend notamment le fuselage, délimitant de corps de l'avion et définissant son enveloppe structurelle, la voilure, comprenant les deux ailes, permettant d'assurer la portance de l'avion en vol, et l'empennage placé à l'arrière de l'avion et permettant d'assurer sa stabilité.

La structure primaire comporte notamment plusieurs longerons. Selon l'état de la technique, un longeron possède une section transversale en U de manière à posséder une rigidité élevée. De manière connue, un longeron est réalisé dans un matériau métallique, par exemple en aluminium. Cependant un matériau métallique présente l'inconvénient d'être lourd, aussi les longerons sont de nos jours généralement fabriqués dans un matériau composite.

De manière connue, un longeron en matériau composite est réalisé par imprégnation de fibres de renforts dans une matrice thermodurcissable. Une telle matrice thermodurcissable est figée par polymérisation, c'est-à-dire au moyen d'une réaction chimique au cours de laquelle la matrice passe de l'état liquide ou visqueux à l'état solide sous l'effet de la chaleur. Lorsque la matrice thermodurcissable est chaude celle-ci est moulée afin d'obtenir la forme souhaitée, comme c'est le cas par exemple de longerons en forme de U, pour lesquels il est nécessaire de courber les deux branches latérales. Pour cela, la pièce composite thermodurcissable est moulée, par exemple, par thermocompression dans un autoclave. De manière connue, un autoclave est une enceinte hermétique dans laquelle la pression et la température peuvent être contrôlées et augmentées de manière à presser le matériau composite entre un moule et un contre-moule par exemple tout en chauffant l'ensemble, afin de donner à la pièce fabriquée sa forme finale. Cependant, un tel autoclave présente des dimensions limitées, ce qui ne permet pas la fabrication de pièces de grandes dimensions comme par exemple des longerons d'une aile d'avion, qui doivent tenir dans une enceinte confinée. De plus, de telles pièces composites sont longues à fabriquer. La polymérisation est réalisée par chauffage par exemple à 180°C pendant une durée supérieure à 8 heures. La cadence de fabrication est donc faible.

Aussi, il existe une volonté pour remplacer les pièces composites à matrice thermodurcissable par des pièces composite à matrice thermoplastique. Le cycle de fabrication d'une telle pièce est plus court mais présente l'inconvénient de devoir être chauffée à de très hautes températures, pouvant aller jusqu'à 410°C afin de consolider la pièce composite.

Pour former une telle pièce, les fibres de renfort sont noyées dans la matrice thermoplastique puis l'ensemble est chauffé et positionné entre deux moules pour être mis en forme par exemple dans une presse, appliquant une pression importante sur l'ensemble des moules au moyen d'un ou plusieurs vérins hydrauliques. Cependant, un tel procédé de fabrication présente l'inconvénient de nécessiter un alignement parfait des deux moules positionnés en vis-à-vis l'un de l'autre, afin de limiter les risques de déformation de la pièce, ainsi qu'une pression équivalente sur toute la longueur des moules, de manière à compresser l'ensemble du moule, ce qui est complexe à mettre en oeuvre pour la fabrication de pièces de grandes dimensions. Aussi, les procédés de fabrication selon l'art antérieur ne permettent pas la fabrication de pièces de grandes dimensions comme par exemple un longeron monobloc.

Selon l'état de l'art, il n'existe pas à ce jour de procédé alternatif à l'autoclave permettant la fabrication plus rapide de pièces en matériau composite thermoplastique. De plus, aucun procédé ne permet à ce jour la fabrication de pièces de grandes dimensions. En effet, la fabrication d'un seul tenant de pièces longues permet de limiter les jonctions dues à l'assemblage de plusieurs pièces permettant ainsi de limiter la présence de zones fragiles dans la structure primaire d'un avion.

Un des objectifs de la présente invention est de proposer un dispositif et un procédé de fabrication de pièces thermoplastiques simple, rapide et efficace, permettant la fabrication de pièces longues, d'un seul tenant, sans nécessiter l'utilisation d'un autoclave.

WO2015/082813A1 enseigne un procédé de collage, par une couche d'adhésif, d'un bord d'attaque sur une aube permettant à la fois d'imposer une pression constante à la couche d'adhésif tout au long du cycle de fabrication, de contrôler l'épaisseur d'une telle couche d'adhésif, en permettant de préférence l'application d'une épaisseur constante. Un tel document ne concerne pas la fabrication de pièces thermoplastiques mais vise uniquement à durcir une couche d'adhésif.

US2015/013894 A1 présente un procédé pour la formation de structures composites de forme creuse par le renforcement de fibres thermoplastiques. Il enseigne d'utiliser un organe métallique, pour soutenir la structure thermoplastique, dont la forme varie en fonction de la pression et ne permet pas de définir précisément la surface de la structure composite.

### PRESENTATION GENERALE DE L'INVENTION

A cet effet, l'invention concerne un système de fabrication d'au moins une pièce thermoplastique structurelle, destinée à être intégrée à une structure primaire d'un d'avion, ladite pièce thermoplastique structurelle étant formée à partir d'une pièce d'ébauche comportant des fibres de renfort noyées dans une matrice thermoplastique, la pièce thermoplastique structurelle à fabriquer comprenant une face extérieure et une face intérieure, opposée à la face extérieure , le système de fabrication comprenant :
- un premier moule, comprenant une empreinte intérieure destinée à former la face extérieure de la pièce thermoplastique à fabriquer,
- un premier contre-moule comprenant une empreinte extérieure destinée à former la face intérieure de la pièce thermoplastique à fabriquer, la pièce d'ébauche étant destinée à être montée entre le premier moule et le premier contre-moule,
- un deuxième moule configuré pour être monté en vis-à-vis du premier moule,
- un dispositif de fermeture des moules de manière à interdire leur écartement,
- un dispositif de chauffage de la pièce d'ébauche à une température de chauffage supérieure à la température de fusion de la matrice thermoplastique de manière à la rendre malléable,
- au moins un organe de pression gonflable réalisé dans un matériau ayant une résistance thermique supérieure à la température de chauffage, l'organe de pression gonflable étant monté entre le premier contre-moule et le deuxième moule,
- l'organe de pression gonflable étant configuré pour évoluer entre un état dégonflé de repos et un état gonflé de contrainte dans lequel l'organe de pression gonflable est configuré pour plaquer la pièce d'ébauche entre l'empreinte du premier moule et l'empreinte du premier contre-moule de manière à consolider la pièce d'ébauche et former la pièce thermoplastique structurelle.

De manière avantageuse, un tel système de fabrication permet avantageusement de réaliser des pièces longues en matériau thermoplastique sans nécessiter d'autoclave ou de presse pour frapper les pièces thermoplastiques. L'utilisation d'un organe de pression gonflable permet de s'adapter à différentes formes de pièces thermoplastiques à fabriquer pour réduire la porosité d'une pièce d'ébauche dont la matrice thermoplastique est à l'état malléable du fait du chauffage. Grâce à l'invention, le système de fabrication possède une structure fiable et robuste et permet la réalisation de pièces thermoplastiques de grande longueur à haute cadence. En effet, le chauffage peut être réalisé sur une courte durée, ce qui diffère d'une matrice thermodurcissable.

Par consolider, on entend diminuer la porosité de la pièce et assurer la cohésion de la matière thermoplastique.

De manière préférée, l'empreinte du premier moule possède une longueur supérieure à 5m.

Grâce à l'invention, le système de fabrication permet la fabrication de pièces longues d'un seul tenant, permettant de limiter les jointures et les zones de faiblesse. De manière avantageuse, un tel moule/contre-moule possède un coût réduit par comparaison à une presse de frappe ou à un autoclave. De plus, il suffit d'adapter les empreintes du moule et du contre-moule pour obtenir la forme souhaitée.

De manière préférée, l'organe de pression gonflable est configuré pour résister à une température de chauffage au moins égale à 350°C, de préférence, au moins égale à 380°C, de préférence encore 450°C, de préférence encore 600°C. Un tel organe de pression gonflable est particulièrement adapté pour la compression d'une matrice thermoplastique poreuse.

De préférence, l'organe de pression gonflable est réalisé dans un matériau du type polyimide ou silicone. De manière avantageuse, un tel matériau résiste à de très hautes températures et présente d'excellentes propriétés de démoulage, l'organe de pression gonflable se retirant facilement et rapidement. Un tel organe de pression gonflable permet à son enveloppe de se déformer pour appliquer une force de plaquage homogène limitant le risque de défauts.

De préférence, l'organe de pression gonflable est gonflé à une pression intérieure comprise entre 1 bar (1000 hPa) et 15 bars (15000 hPa), de préférence, entre 7 bars (7 000 hPa) et 12 bars (12 000 hPa).

Selon un aspect de l'invention, lorsque l'organe de pression est en polyimide, le matériau de l'organe de pression gonflable possède une épaisseur comprise entre 25 µm et 100 µm, de préférence de l'ordre de 50 µm, de manière à assurer un compromis entre résistance à la chaleur/pression et flexibilité.

Selon un autre aspect de l'invention, lorsque l'organe de pression est en silicone, le matériau de l'organe de pression gonflable possède une épaisseur comprise entre 1 mm et 7 mm, de préférence de l'ordre de 5 mm.

Selon un aspect de l'invention, le deuxième moule comprenant une deuxième empreinte, ledit système de fabrication comprenant un deuxième contre-moule monté entre l'organe de pression gonflable et le deuxième moule, l'organe de pression gonflable est configuré pour, dans son état contraint, plaquer à la fois une première pièce d'ébauche entre le premier contre-moule et le premier moule et une deuxième pièce d'ébauche entre ledit deuxième contre-moule et le deuxième moule de manière à permettre la fabrication simultanée de deux pièces thermoplastiques structurelles.

Un tel système de fabrication permet de fabriquer de manière simultanée deux pièces thermoplastiques avec un unique organe de pression. Cela permet avantageusement d'augmenter la productivité tout en améliorant l'amortissement de l'organe de pression gonflable dont le coût est élevé.

De manière préférée, le premier contre-moule comporte une première partie et une deuxième partie qui sont reliées par des moyens de réglage de l'écartement, de préférence, une portion flexible. Ainsi, l'encombrement du premier contre-moule peut être réduit pour coopérer avec une pièce d'ébauche comportant une cavité étroite du fait de sa porosité, ce qui facilite le montage du contre-moule. De plus, lors du plaquage par l'organe de pression gonflable, le premier contre-moule s'étend pour consolider la pièce d'ébauche et obtenir les dimensions souhaitées.

Selon un aspect de l'invention, l'organe de pression gonflable possède une forme globalement parallélépipédique.

De préférence, l'organe de pression gonflable comprend, à l'état de repos, au moins un pli intérieur. Lors du gonflage, l'enveloppe de l'organe de pression gonflable se détend et la longueur du pli intérieur diminue pour épouser la forme du contre-moule et appliquer une force de plaquage homogène. A l'état de repos, l'encombrement de l'organe de pression gonflable est réduit, ce qui facilite sa coopération avec un contre-moule. Un tel pli permet d'autoriser une déformation de l'enveloppe même si l'organe de pression gonflable n'est pas réalisé dans un matériau étirable.

De manière préférée, l'organe de pression gonflable comprend au moins une ouverture d'accès permettant le gonflage et le dégonflage de l'organe de pression gonflable.

Selon un aspect de l'invention, le premier contre-moule est réalisé dans un matériau ayant un coefficient de dilatation thermique qui est analogue à celui de la pièce d'ébauche de manière à permettre un plaquage optimal. De préférence, le premier contre-moule est réalisé dans un matériau polymère organique, matériau polymère minéral ou un matériau composite à matrice organique/inorganique ou matériau métallique. Le premier contre-moule est à l'état solide. Un tel matériau permet avantageusement « d'absorber » les plis de l'organe de pression afin de ne pas les former sur la pièce d'ébauche.

L'invention concerne également un procédé de fabrication par le système de fabrication tel que présenté précédemment d'une pièce thermoplastique structurelle à partir d'une pièce d'ébauche, la pièce d'ébauche étant positionnée entre l'empreinte du premier moule et l'empreinte du premier contre-moule, l'organe de pression gonflable étant dans un état dégonflé de repos, ledit procédé comprend :
- une étape de chauffage de la matrice thermoplastique de la pièce d'ébauche de manière à la rendre malléable et
- une étape de gonflage de l'organe de pression gonflable dans un état gonflé de contrainte dans lequel l'organe de pression gonflable plaque la pièce d'ébauche entre l'empreinte du premier moule et l'empreinte du premier contre-moule de manière à consolider la pièce d'ébauche et former la pièce thermoplastique structurelle.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'une pièce thermoplastique structurelle d'une aile d'avion,
- la figure 2 est une représentation schématique d'une pièce d'ébauche pour la fabrication de la pièce thermoplastique de la figure 1,
- la figure 3 est une représentation schématique en perspective d'un module de moulage selon un mode de réalisation de l'invention pour la fabrication simultanée de deux pièces thermoplastiques,
- la figure 4 est une représentation schématique en coupe d'un module de moulage selon l'invention,
- la figure 5 est une représentation schématique d'un système de fabrication selon une forme de réalisation de l'invention,
- la figure 6A représente schématiquement un premier moule,
- les figures 6B et 6C sont des vues en coupe dans différents plans de projection du moule de la figure 6A,
- les figures 7A et 7B représentent schématiquement une première forme de réalisation d'un contre-moule,
- les figures 7C et 7D représentent schématiquement une deuxième forme de réalisation d'un contre-moule,
- la figure 8A représente schématiquement un organe de pression,
- les figures 8B et 8C représentent schématiquement une vue en coupe de l'organe de pression dans un état de repos et dans un état contraint,
- la figure 9 représente des étapes d'un procédé de fabrication selon un mode de réalisation de l'invention et
- la figure 10 est une représentation schématique en perspective d'un module de moulage selon l'invention pour la fabrication d'une unique pièce thermoplastique.

Il faut noter que les figures exposent l'invention de manière détaillée pour mettre en oeuvre l'invention, lesdites figures pouvant bien entendu servir à mieux définir l'invention le cas échéant. L'invention étant définie par les revendications attenantes.

### DESCRIPTION D'UN OU PLUSIEURS MODES DE REALISATION ET DE MISE EN OEUVRE

De manière connue, une pièce thermoplastique structurelle, destinée à être intégrée à une structure primaire d'un d'avion, est formée à partir d'une pièce d'ébauche.

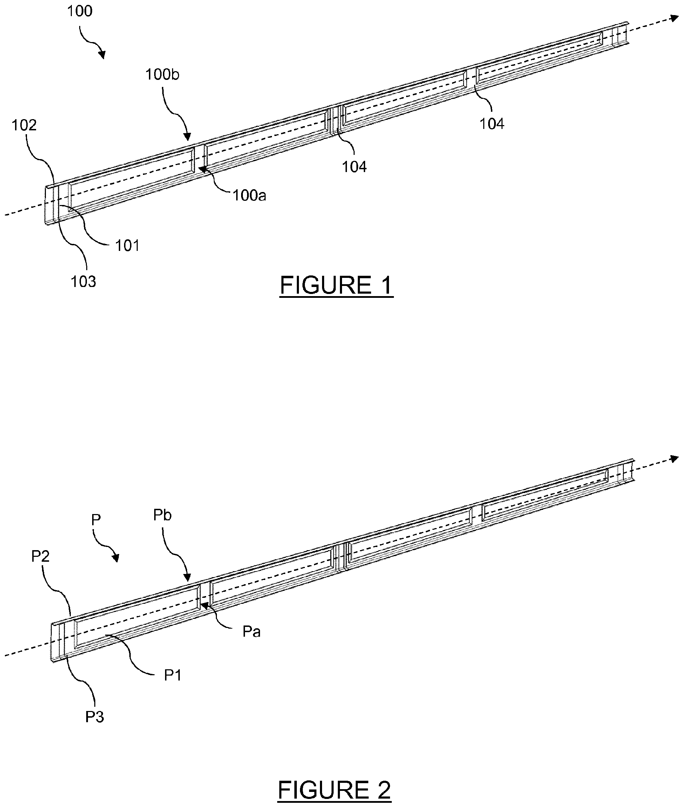

Dans cet exemple, en référence à la figure 1, la pièce thermoplastique structurelle à fabriquer 100 possède une section en forme de U définissant une paroi de fond 101 et deux parois latérales 102, 103 s'étendant orthogonalement à la paroi de fond 101. Selon un exemple de réalisation, la paroi de fond 101 présente une épaisseur variable et une largeur variable. La pièce thermoplastique à fabriquer 100 comprend une pluralité de raidisseurs 104 permettant de rigidifier ses parois 101, 102, 103 tout en limitant son poids. De manière préférée, la pièce thermoplastique à fabriquer 100 comprend une face extérieure 100b et une face intérieure 100a qui sont définies par rapport à la cavité intérieure du U dont la pièce thermoplastique100 a la forme. De manière plus précise, la pièce thermoplastique à fabriquer 100 comprend trois surfaces intérieures (une face intérieure de la paroi de fond 101 et une face intérieure pour chacune des parois latérales 102, 103) et trois surfaces extérieures (une face extérieure de la paroi de fond 101 et une face extérieure pour chacune des parois latérales 102, 103).

En référence à la figure 2, il est représenté une pièce d'ébauche P destinée à former la pièce thermoplastique 100. La pièce d'ébauche P comporte des fibres de renfort noyées dans une matrice thermoplastique. A titre d'exemple, les fibres de renfort sont en carbone et la matrice est en PEEK ou PEKK. De manière analogue, la pièce d'ébauche P comprend une paroi de fond P1 et deux parois latérales P2, P3 qui définissent une face extérieure Pb et une face intérieure Pa. La pièce d'ébauche P possède une porosité importante qui doit être réduite.

Comme indiqué précédemment, afin d'obtenir une pièce thermoplastique finie 100, la pièce d'ébauche P doit être chauffée à une température supérieure à la température de fusion de la matrice thermoplastique tout en étant compressée afin d'augmenter sa densité et se rigidifier. La pièce d'ébauche P possède une flexibilité qui lui permet d'épouser la forme de la surface qui la supporte comme cela sera présentée par la suite. De manière connue, la pièce d'ébauche P est réalisée par drapage des fibres de renfort à plat ou de manière tridimensionnelle. Dans cet exemple, la pièce d'ébauche P est tridimensionnelle.

Le système de fabrication 1 selon l'invention permet avantageusement de fabriquer des pièces thermoplastiques 100 telles que décrites précédemment de manière simple et rapide à partir de pièces d'ébauche P. De manière avantageuse, des cadences de fabrication élevées peuvent être obtenues.

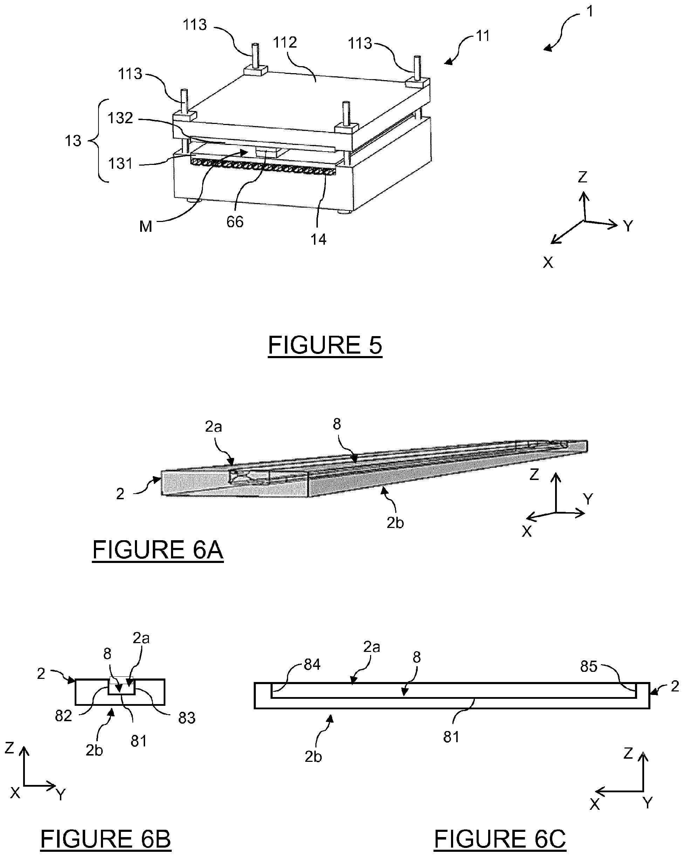

En référence à la figure 5, il est représenté un système de fabrication 1 selon une forme de réalisation préféré de l'invention qui comprend un dispositif de fermeture 11 dans lequel est monté un module de moulage M.

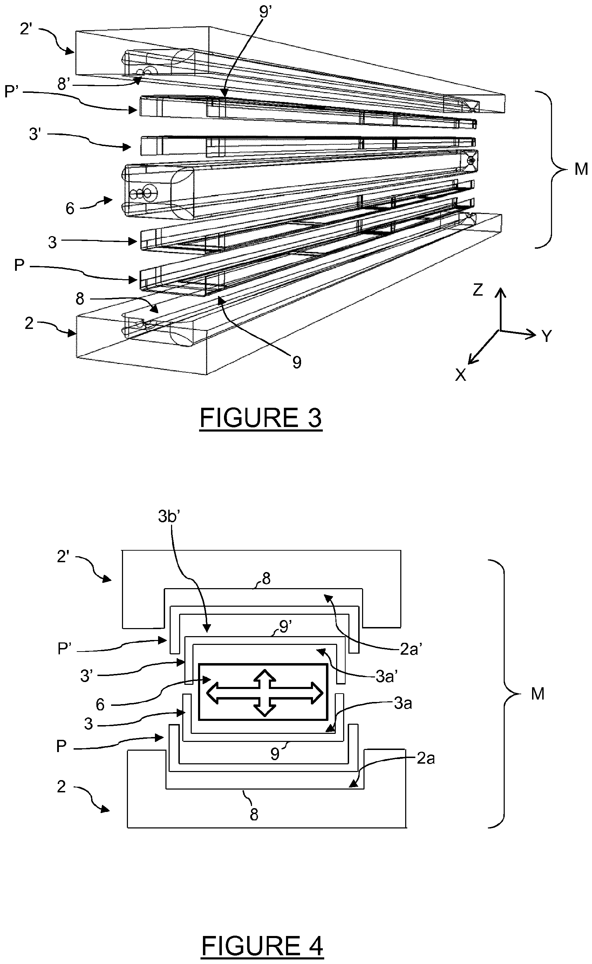

Comme illustré aux figures 3 et 4, le module de moulage M comporte :
- un premier moule 2, comprenant une empreinte 8 de la face extérieure 100b d'une première pièce thermoplastique à fabriquer 100,
- un deuxième moule 2' configuré pour être monté en vis-à-vis du premier moule 2, le deuxième moule 2' comprenant une empreinte 8' de la face extérieure 100b' d'une deuxième pièce thermoplastique à fabriquer 100',
- un premier contre-moule 3 comprenant une empreinte 9 de la face intérieure 100a de la première pièce thermoplastique à fabriquer 100,
- un deuxième contre-moule 3' comprenant une empreinte 9' de la face intérieure 100a' de la deuxième pièce thermoplastique à fabriquer 100' et
- un organe de pression gonflable 6, monté entre le premier contre-moule 3 et le deuxième contre-moule 3' configuré, d'une part, pour presser le premier contre-moule 3 contre le premier moule 2 et, d'autre part, pour presser le deuxième contre-moule 3' contre le deuxième moule 2'.

Dans cette forme de réalisation, le module de moulage M permet la formation simultanée d'une première pièce thermoplastique 100 et d'une deuxième pièce thermoplastique 100'. Néanmoins, l'invention s'applique également pour la fabrication d'une unique pièce thermoplastique 100.

Comme illustré à la figure 5, le module de moulage M s'étend dans cet exemple longitudinalement selon un axe X, latéralement selon un axe Y et verticalement selon un axe Z, de manière à former un repère (X, Y, Z). Par la suite, les termes « supérieur » et « inférieur » sont définis par rapport à l'axe vertical Z qui est orienté du bas vers le haut, c'est-à-dire, d'une position inférieure à une position supérieure.

Comme illustré à la figure 3, le système de fabrication 1 comprend un premier moule 2 et un deuxième moule 2' qui sont montés en vis-à-vis l'un de l'autre. De manière préférée, les moules 2, 2' sont configurés pour coopérer ensemble en position fermée de manière à former un sarcophage qui peut être inséré dans le dispositif de fermeture 11 comme cela sera présenté par la suite. Dans cet exemple, les moules 2, 2' comportent des pions pour coopérer ensemble mais II va de soi que les moules 2, 2' pourraient être relié par différents organes de liaison, par exemple des aimants, des crochets ou de tout autre organe permettant la liaison amovible du premier moule 2 avec le deuxième moule 2'.

Dans cet exemple, le premier moule 2 et le deuxième moule 2' sont positionnés en vis-à-vis l'un de l'autre. Les moules 2, 2' sont identiques pour fabriquer des pièces thermoplastiques identiques ou symétriques pour fabriquer des pièces symétriques, notamment, une pièce gauche et une pièce droite. Aussi, par souci de clarté et de concision, seul le premier moule 2 sera présenté en détails par la suite.

Comme représenté sur les figures 6A à 6C, le premier moule 2 présente une forme sensiblement parallélépipédique rectangle et est de préférence formé dans un matériau métallique, tel que de l'acier ou un alliage de fer et de nickel (par exemple l'INVAR). Un tel moule 2 est configuré pour résister à la fois à de fortes pressions, allant jusqu'à 15 bars (15 000 hPa) et à de hautes températures pouvant atteindre 600°C. Le premier moule 2 présente des dimensions permettant avantageusement la fabrication d'une pièce thermoplastique 100 jusqu'à 5 m de long d'un seul tenant et en une seule opération.

De même, le premier moule 2 présente une épaisseur suffisante pour permettre la formation de l'empreinte 8 de manière à permettre l'insertion de la pièce d'ébauche P. Comme illustré à la figure 6A, le premier moule 2 comprend une face extérieure 2b et une face intérieure 2a dans laquelle est formée l'empreinte 8. La face extérieure 2b est de préférence plane et est configurée pour coopérer avec le dispositif de fermeture 11 pour bloquer le module de moulage M. La face intérieure 2a comprend une empreinte 8, configurée pour coopérer avec la face extérieure Pb de la pièce d'ébauche P pour former la face extérieure 100b de la pièce thermoplastique à fabriquer 100.

En référence à la figure 6B, l'empreinte 8 se présente sous la forme d'une cavité ayant une section transversale en forme de U définissant une paroi de fond 81 et deux parois latérales 82, 83. Comme illustré à la figure 6C, l'empreinte 8 possède également deux parois d'extrémité 84, 85 qui sont formées à ses extrémités longitudinales. Il va de soi que la forme de l'empreinte 8 peut être adaptée à la pièce thermoplastique à fabriquer 100. Les dimensions de l'empreinte 8 du premier moule 2 correspondent aux dimensions extérieures de la pièce thermoplastique à fabriquer 100 de manière à permettre la formation d'une pièce thermoplastique 100 aux dimensions souhaitées.

De manière avantageuse, le système de fabrication 1 comporte un dispositif de fermeture 11 des moules 2, 2' de manière à interdire leur écartement, en particulier, lors du gonflage de l'organe de pression 6.

Dans cet exemple, en référence à la figure 5, le dispositif de fermeture 11 comporte un organe de blocage inférieur 111 et un organe de blocage supérieur 112 monté mobile en translation par rapport à l'organe de blocage inférieur 111 selon la direction verticale Z, en particulier, grâce à des organes de guidage 113. De préférence, le dispositif de fermeture 11 se présente sous la forme d'une presse pneumatique.

Le dispositif de fermeture 11 permet de réduire le risque de désalignement des moules 2, 2' et par voie de conséquence les risques de défauts lors de la fabrication.

Les contraintes d'alignement des organes de blocage 111, 112 sont faibles en comparaison à celles d'une presse de frappe qui impose une correspondance parfaite des empreintes lors de chaque frappe de la presse. Aussi, un tel dispositif de fermeture 11 possède un coût réduit. Dans le cas présent, le dispositif de fermeture 11 permet essentiellement d'empêcher l'écartement des moules 2, 2', l'organe de pression gonflable 6 étant en charge de la force de compression.

Afin de permettre la formation de la pièce thermoplastique à fabriquer 100, le système de fabrication 1 comprend en outre un dispositif de chauffage 13 chauffant le premier moule 2 et le deuxième moule 2'. De manière préférée, le dispositif de chauffage 13 est configuré pour réaliser un chauffage jusqu'à la température de fusion de la matrice thermoplastique de l'ébauche, en particulier jusqu'à une température de 600°C.

Dans cet exemple, en référence à la figure 5, le dispositif de chauffage 13 comporte un organe de chauffage inférieur 131 monté à l'organe de blocage inférieur 111 et un organe de chauffage supérieure 132 monté à l'organe de blocage supérieur 112. De manière préférée, chaque organe de chauffage 131, 132 se présente sous la forme d'un plateau comportant une pluralité de résistances chauffantes. Chaque organe de chauffage 131, 132 est configuré pour venir directement en contact d'un moule 2, 2' afin de le chauffer par conduction thermique. Il va de soi que le dispositif de chauffage 13 pourrait ne comprendre qu'un seul organe de chauffage 131, 132.

Il va de soi que le dispositif de chauffage 13 pourrait se présenter sous une forme différente, en particulier, pour réaliser un chauffage par induction. De même, il va de soi que le dispositif de chauffage 13 pourrait être dissocié du dispositif de fermeture 11.

De manière préférée, comme illustré à la figure 5, le dispositif de fermeture 11 comporte des moyens de plaquage complémentaire 14, en particulier des boudins gonflables, qui sont situés entre l'organe de blocage inférieur 111 et l'organe de chauffage inférieur 131. De tels moyens de plaquage complémentaire 14 permettent de venir plaquer de manière intime l'organe de chauffage inférieur 131 avec le premier moule 2 afin de rattraper tout jeu entre les organes de blocage 111, 112. Cela est particulièrement avantageux lorsque les pièces à fabriquer ont une longueur supérieure à 5 m.

A l'image des deux moules 2, 2', le premier contre-moule 3 et le deuxième contre-moule 3' sont positionnés en vis-à-vis l'un de l'autre dans l'ensemble de moulage M tel que présenté à la figure 3. Les contre-moule 3, 3' sont identiques pour fabriquer des pièces thermoplastiques identiques ou symétriques pour fabriquer des pièces symétriques, notamment, une pièce gauche et une pièce droite. Aussi, seul le premier contre-moule 3 sera présenté en détails dans la suite de ce document.

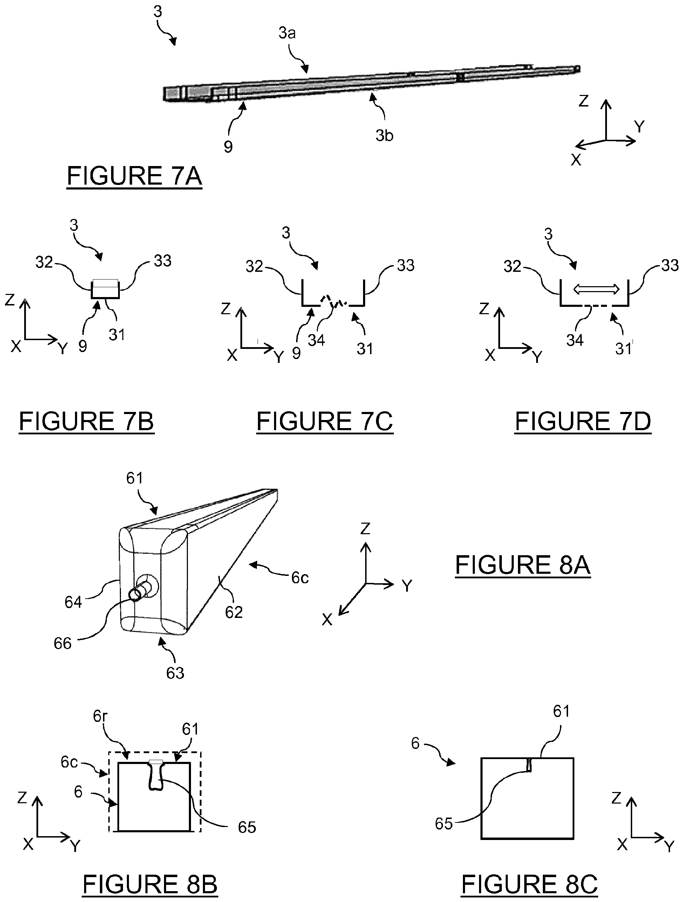

Comme représenté sur les figures 7A à 7D, le premier contre-moule 3 possède une section transversale en forme de U définissant une paroi de fond 31 et deux parois latérales 32, 33. Le premier contre-moule 3 est de préférence formé dans un matériau polymère organique, matériau polymère minéral ou un matériau composite à matrice organique/inorganique ou matériau dont le coefficient de dilatation thermique est faible (par exemple de l'ordre de 1,5.10⁻⁶ K⁻¹), de manière à ne pas se déformer sous l'effet de la chaleur. Un tel matériau permet en outre de lisser la pièce d'ébauche P lorsque celle-ci est mise en forme pour fabriquer la pièce thermoplastique 100 et permet avantageusement de limiter la formation d'aspérités ou de plis involontaires dus à la pression du contre-moule 3 sur la pièce thermoplastique à fabriquer 100.

Le premier contre-moule 3 présente en outre des dimensions configurées pour permettre l'insertion du premier contre-moule 3 dans la cavité du U dont la pièce d'ébauche P a la forme.

Comme illustré à la figure 7A, le premier contre-moule 3 comprend une face extérieure 3b destinée à entrer en contact avec la pièce d'ébauche P et une face intérieure 3a destinée à entrer en contact avec un organe de pression gonflable 6. En particulier, la face extérieure 3b est configurée pour coopérer avec la face intérieure Pa de la pièce d'ébauche P. La face extérieure 3b comprend une empreinte 9 de la face intérieure 100a de la pièce thermoplastique à fabriquer 100. Dans cet exemple, l'empreinte 9 s'étend sur la face extérieure 3b de toutes les parois 31, 32, 33 du premier contre-moule 3. De préférence, les dimensions de l'empreinte 9 sont identiques aux dimensions intérieures de la pièce thermoplastique à fabriquer 100 décrites précédemment. Ainsi, lorsque la pièce d'ébauche P est contrainte et chauffée entre l'empreinte 8 du premier moule 2 et l'empreinte 9 du deuxième moule 2', la pièce d'ébauche P se déforme afin de diminuer sa porosité et épouser la forme des empreintes 8, 9.

Selon un aspect préféré de l'invention, en référence aux figures 7C et 7D, la paroi de fond 31 du premier contre-moule 3 comprend des moyens d'écartement configurés pour faire varier la largeur de la paroi de fond 31 et, par voie de conséquence, l'écartement latéral entre les parois latérales 32, 33. Dans cette forme de réalisation, les moyens d'écartement se présentent sous la forme d'une portion flexible 34.

De tels moyens d'écartement sont particulièrement avantageux lors du montage du premier contre-moule 3 dans la pièce d'ébauche P. En effet, étant donné que la pièce d'ébauche P possède une porosité élevée, les parois latérales P2, P3 possèdent une épaisseur plus importante que celles 102, 103 de la pièce thermoplastique finie 100. Aussi, la cavité du U de la pièce d'ébauche P est plus étroite que celle de la pièce thermoplastique finie 100. Grâce aux moyens d'écartement, le premier contre-moule 3 peut aisément être introduit dans la cavité intérieure du U de la pièce d'ébauche P en comprimant la portion flexible 34 comme illustré à la figure 7C.

Lors de la fabrication, l'organe de pression gonflable 6 écarte les parois latérales 32, 33 du contre-moule 3 et tend la portion flexible 34 pour plaquer de manière optimale les parois latérales P2, P3 de la pièce d'ébauche P et obtenir l'épaisseur souhaitée. Une telle caractéristique permet d'augmenter les cadences de fabrication.

Il va de soi que les moyens d'écartement pourraient se présenter sous une forme différente, par exemple sous la forme de deux portions configurées pour coulisser l'une par rapport à l'autre.

Comme décrit précédemment, l'ensemble de moulage M comprend un organe de pression gonflable 6 se présentant dans cet exemple sous la forme d'un ballon vessie et configuré pour plaquer, d'une part, une première pièce d'ébauche P entre l'empreinte du premier moule 2 et l'empreinte du premier contre-moule 3 et, d'autre part, une deuxième pièce d'ébauche P' entre l'empreinte du deuxième moule 2' et l'empreinte du deuxième contre-moule 3'.

Pour cela, l'organe de pression gonflable 6 est configuré pour évoluer entre un état de repos, dans lequel le ballon vessie est dit « dégonflé » et peut être inséré sans contrainte entre les contre-moule 3, 3', et un état contraint, dans lequel le ballon vessie est dit « gonflé » et dans lequel il plaque les contre-moule 3, 3' contre leurs moules 2, 2'.

Dans cet exemple, en référence à la figure 8A, l'organe de pression gonflable 6 présente une forme sensiblement parallélépipédique rectangulaire pour coopérer avec la face intérieure 3a du premier contre-moule 3 et avec la face intérieure 3a' du deuxième contre-moule 3' (Figure 4). A ce titre, en référence à la figure 8A, l'organe de pression gonflable 6 comprend dans cet exemple quatre faces 61, 62, 63, 64. De préférence, l'organe de pression gonflable 6 comprend une ou plusieurs ouvertures d'accès 66 pour permettre son gonflage/dégonflage. L'ouverture d'accès 66 est formée à une extrémité longitudinale de l'organe de pression gonflable 6 et s'étend en saillie des moules 2, 2' de manière à permettre un gonflage/dégonflage lorsque les moules 2, 2' sont fermés.

De préférence, l'organe de pression gonflable 6 est réalisé dans un matériau flexible pouvant résister à de très hautes températures allant jusqu'à 450°C, de préférence encore jusque à 600°C. De préférence encore, le matériau flexible peut résister à une pression intérieure, jusqu'à 9 bars (9000 hPa), de préférence encore, jusqu'à 15 bars (15000 hPa). La section transversale de l'organe de pression gonflable 6 peut avantageusement évoluer en fonction de son état de gonflage comme cela sera présenté par la suite.

De manière préférée, l'organe de pression gonflable 6 est réalisé en polyimide qui répond aux contraintes de température et de pression. Le matériau connu sous sa désignation commerciale « Thermalimide » de la société Airtech convient par exemple à cette application. Un tel matériau présente également des propriétés élevées de démoulage, permettant un retrait aisé et rapide de l'organe de pression gonflable 6 après fabrication des pièces thermoplastiques 100.

Selon un aspect de l'invention, lorsque l'organe de pression gonflable 6 est en polyimide, le matériau de l'organe de pression gonflable possède une épaisseur comprise entre 25 µm et 100 µm, de préférence de l'ordre de 50 µm, de manière à assurer un compromis entre résistance à la chaleur/pression et flexibilité. Un tel organe de pression gonflable 6 permet avantageusement de s'adapter à la forme du contre-moule du fait de sa faible épaisseur qui augmente la flexibilité. L'organe de pression gonflable 6 peut ainsi appliquer une force de pression homogène sans être étirable.

De manière alternative, l'organe de pression gonflable 6 est réalisé en silicone et possède une épaisseur comprise entre 1 mm et 7 mm, de préférence de l'ordre de 5 mm. Un tel organe de pression gonflable 6 permet avantageusement de s'étirer lors du gonflage mais possède une épaisseur plus importante.

Selon une forme de réalisation préférée de l'invention, en référence aux figures 8B et 8C, l'organe de pression gonflable 6 présente à l'état de repos une forme de repos 6r sensiblement similaire à la forme contrainte 6c de l'organe de pression gonflable 6. En effet, compte tenu de ses propriétés de résistance thermique et de résistance à la pression, l'organe de pression gonflable 6 n'est pas étirable à la manière d'un ballon de baudruche. Seules les dimensions de l'organe de pression gonflable 6 diffèrent entre les deux états. Dans cet exemple, l'organe de pression gonflable 6 comprend, à l'état de repos, sur l'une de ses quatre faces, au moins un pli 65 ou bourrelet interne (représenté sur la figure 8B), s'étendant à l'intérieur de l'organe de pression gonflable 6, de manière à ne pas créer d'excroissance à l'extérieur sur le contre-moule 3, 3', ce qui engendrerait une force de plaquage hétérogène sur le contre-moule 3, 3' et affecterait négativement la forme de la pièce thermoplastique à fabriquer 100. Un ou plusieurs plis 65 sont avantageux lorsque l'organe de pression gonflable 65 est en polyimide étant donné que les plis 65 limitent le risque de rupture en cas de gonflage excessif, le polyimide n'étant pas étirable.

Lorsque la pression interne augmente dans l'organe de pression gonflable 6, c'est-à-dire lorsque le ballon vessie passe de l'état de repos (Figure 8B) à l'état contraint (Figure 8C), la section transversale de l'organe de pression gonflable 6 est configurée pour augmenter en déployant le pli 65 dont la dimension se réduit comme cela est représenté sur la figure 8C. Un tel pli 65 permet ainsi d'augmenter le volume de l'organe de pression gonflable 6 sans l'étirer, de manière à atteindre sa forme définitive lorsque l'organe de pression gonflable 6 est mis sous pression.

Comme décrit précédemment, l'organe de pression gonflable 6 est avantageusement configuré pour, à l'état contraint, se plaquer contre la face intérieure 3a, 3a' de chaque contre-moule 3, 3', de manière à plaquer chaque pièce d'ébauche P entre la face intérieure 2a, 2a' du moule 2, 2' et la face extérieure 3b, 3b' du contre-moule 3, 3'. Autrement dit, chaque pièce d'ébauche P, P' est prise en sandwich sous pression entre un moule 2, 2' et un contre-moule 3, 3'.

Un tel module de moulage M permet avantageusement la fabrication simultanée de deux pièces thermoplastiques 100 de grandes dimensions, présentant dans cet exemple une longueur de plus de 5 mètres, sans risquer le décalage d'un moule par rapport à un autre étant donné que ceux-ci demeurent fixes lors de la compression. De plus, le système de fabrication 1 selon l'invention permet la fabrication d'une pièce thermoplastique 100 en assurant une forme de plaquage homogène sur l'ensemble de la longueur tout en résistant à une température de chauffage élevée nécessaire pour permettre à la matrice thermoplastique de fondre afin de consolider la pièce d'ébauche P lors de la compression.

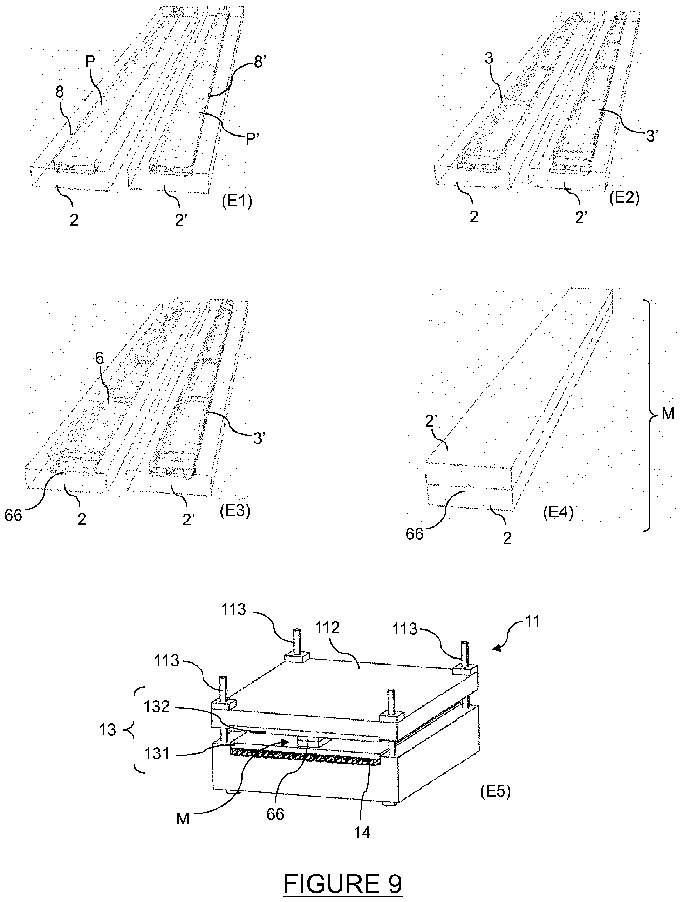

Il va dorénavant être décrit un procédé de fabrication de deux pièces thermoplastiques 100, 100' à partir de deux pièces d'ébauche P, P' selon un mode de mise en oeuvre préféré de l'invention en référence à la figure 9.

Dans cet exemple, le procédé de fabrication permet avantageusement la fabrication simultanée de deux pièces thermoplastiques 100, 100'. Chaque pièce thermoplastique 100, 100' est fabriquée à partir d'une pièce d'ébauche P, P' qui a été préalablement réalisée.

Dans une première étape E1, une première pièce d'ébauche P est positionnée dans l'empreinte 8 du premier moule 2 correspondant à la face extérieure 100b de la première pièce thermoplastique à fabriquer 100. De manière plus précise, la face extérieure Pb de la pièce d'ébauche P est mise en contact avec l'empreinte 8 du premier moule 2. De manière analogue, une deuxième pièce d'ébauche P' est positionnée dans l'empreinte 8' du deuxième moule 2'.

Puis, dans une deuxième étape E2, la face extérieure 3b du premier contre-moule 3 est positionné dans la cavité du U de la première pièce d'ébauche P, c'est-à-dire, contre sa face intérieure Pa. Autrement dit, l'empreinte 9 du premier contre-moule 3, correspondant à la face intérieure 100a de la première pièce thermoplastique à fabriquer 100 est en contact avec la face intérieure Pa de la première pièce d'ébauche P. Comme indiqué précédemment, le positionnement du premier contre-moule 3 est facilité si le premier contre-moule 3 comprend des moyens de réglage de l'écartement. De manière analogue, le deuxième contre-moule 3' est positionné dans la cavité du U de la deuxième pièce d'ébauche P' à la deuxième étape E2.

Dans une troisième étape E3, l'organe de pression gonflable 6 est ensuite inséré, dans son état de repos, contre la face intérieure 3a du premier contre-moule 3. L'ouverture d'accès 66 s'étend en saillie du premier moule 2 de manière à permettre un gonflage/dégonflage lorsque les moules 2, 2' sont fermés.

Puis, au cours d'une quatrième étape E4, le module de moulage M est assemblé en positionnant le deuxième contre-moule 3' sur l'organe de pression gonflable 6, de manière symétrique au premier contre-moule 3. Le deuxième moule 2' est ainsi positionné en vis-à-vis du premier moule 2, de manière à prendre en sandwich les deux pièces ébauches P, P', les deux contre-moules 3, 3', ainsi que l'organe de pression gonflable 6.

Dans une cinquième étape E5, le module de moulage M formé précédemment est alors placé dans le dispositif de fermeture 11 qui empêche tout mouvement relatif entre les moules 2, 2'. En pratique, le module de moulage M est positionné sur l'organe de blocage inférieur 111 puis l'organe de blocage supérieur 112 est descendu contre le module de moulage M puis verrouillé en position pour empêcher tout écartement. De manière avantageuse, les boudins gonflables sont gonflés pour réaliser un plaquage optimal sur la longueur du module de moulage M.

Le dispositif de chauffage 13 est ensuite activé de manière à atteindre une température T de 600°C afin de rendre malléable la matrice thermoplastique des pièces d'ébauche P, P'. Puis, l'organe de pression gonflable 6 est ensuite placé dans son état contraint, en augmentant sa pression intérieure jusqu'à une valeur de pression de 8 bars (8000 hPa). Une telle augmentation de la pression intérieure entraine le déploiement de l'enveloppe extérieure de l'organe de pression gonflable 6, en particulier, un déploiement du pli 65, de manière à ce que l'organe de pression gonflable 6 se déplie et plaque de manière optimale chaque contre moule 3, 3' contre les pièces d'ébauche P, P'. Ainsi, les pièces d'ébauche P, P' sont prises en sandwich entre un moule 2, 2' et un contre moule 3, 3' afin d'épouser la forme de leurs empreintes 8, 9, 8', 9'. La porosité des pièces d'ébauche P, P' diminue de manière à former des pièces thermoplastiques finies 100, 100' aux dimensions souhaitées.

Pour libérer les pièces thermoplastiques finies 100, 100', l'organe de pression gonflable 6 est placé dans son état de repos en diminuant sa pression intérieure. Puis l'ensemble de moulage M est retiré du dispositif de fermeture 11 pour récupérer les pièces thermoplastiques finies 100, 100'.

Un tel procédé de fabrication selon l'invention permet la formation simple et rapide d'une pluralité de pièces thermoplastiques simultanément. En effet, la température atteinte lors du procédé de fabrication, étant élevée, les pièces thermoplastiques, résistant avantageusement à de telles températures, sont ramollies rapidement. L'utilisation d'un ballon vessie comme organe de pression permet également une montée en pression rapide et homogène, permettant le plaquage de chaque face de la pièce d'ébauche entre un moule et un contre-moule, permettant l'impression de l'empreinte intérieure et de l'empreinte extérieure quasi simultanément sur la pièce d'ébauche. Le procédé de fabrication selon l'invention permet également avantageusement la fabrication de pièces de grandes dimensions, pouvant atteindre 5 m de long à des cadences de fabrication élevée. Contrairement à une matrice thermodurcissable, il n'est pas nécessaire de réaliser un chauffage de longue durée, un chauffage de quelques de minutes est ainsi suffisant.

L'invention a été présentée précédemment pour fabriquer deux pièces thermoplastiques de manière simultanée mais il va de soi que l'invention pourrait permettre de les fabriquer une par une ou de les fabriquer en lots.

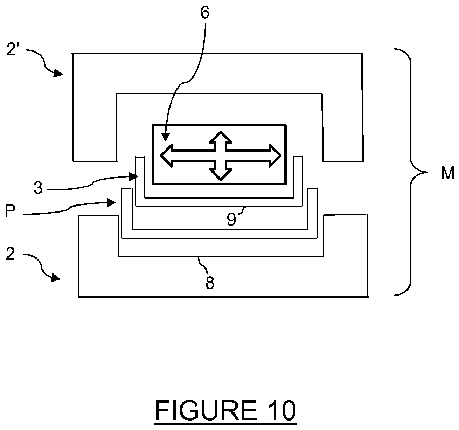

A titre d'exemple, en référence à la figure 10, pour fabriquer une pièce thermoplastique unitaire, il suffit de former un ensemble de moulage M comprenant uniquement un premier moule 2 avec une empreinte 8, un premier contre-moule 3 avec une empreinte 9, un organe de pression 6 et un deuxième moule 2' pour permettre à l'organe de pression 6 de contraindre le premier contre-moule 3 contre le premier moule 2. Il n'est pas nécessaire que le deuxième moule 2' comprenne une empreinte.

## Revendications

1. Système de fabrication (1) d'au moins une pièce thermoplastique structurelle (100), destinée à être intégrée à une structure primaire d'un d'avion, ladite pièce thermoplastique structurelle (100) étant formée à partir d'une pièce d'ébauche (P) comportant des fibres de renfort noyées dans une matrice thermoplastique, la pièce thermoplastique structurelle (100) à fabriquer comprenant une face extérieure (100b) et une face intérieure (100a), opposée à la face extérieure (100b), le système de fabrication (1) comprenant :
- un premier moule (2), comprenant une empreinte intérieure (8) destinée à former la face extérieure (100b) de la pièce thermoplastique à fabriquer (100),
- un premier contre-moule (3) comprenant une empreinte extérieure (9) destinée à former la face intérieure (100a) de la pièce thermoplastique à fabriquer (100), la pièce d'ébauche (P) étant destinée à être montée entre le premier moule (2) et le premier contre-moule (3),
- un deuxième moule (2') configuré pour être monté en vis-à-vis du premier moule (2),
- un dispositif de fermeture (11) des moules (2, 2') de manière à interdire leur écartement,
- un dispositif de chauffage de la pièce d'ébauche (P) à une température de chauffage supérieure à la température de fusion de la matrice thermoplastique de manière à la rendre malléable,
- au moins un organe de pression gonflable (6) réalisé dans un matériau ayant une résistance thermique supérieure à la température de chauffage, l'organe de pression gonflable (6) étant monté entre le premier contre-moule (3) et le deuxième moule (2'),
- l'organe de pression gonflable (6) étant configuré pour évoluer entre un état dégonflé de repos et un état gonflé de contrainte dans lequel l'organe de pression gonflable (6) est configuré pour plaquer la pièce d'ébauche (P) entre l'empreinte (8) du premier moule (2) et l'empreinte (9) du premier contre-moule (3) de manière à consolider la pièce d'ébauche (P) et former la pièce thermoplastique structurelle (100).

2. Système selon la revendication 1, dans lequel l'empreinte (8) du premier moule (2) possède une longueur supérieure à 5 m.

3. Système selon l'une des revendications 1 et 2, dans lequel l'organe de pression gonflable (6) est configuré pour résister à une température de chauffage au moins égale à 350°C, de préférence, au moins égale à 600°C.

4. Système selon l'une des revendications 1 et 3, dans lequel l'organe de pression gonflable (6) est réalisé dans un matériau du type polyimide ou silicone.

5. Système selon l'une des revendications 1 et 4, dans lequel l'organe de pression gonflable (6) est gonflé à une pression intérieure comprise entre 1 bar (1 000 hPa) et 15 bars (15 000 hPa), de préférence, entre 7 bars (7 000 hPa) et 12 bars (12 000 hPa).

6. Système selon l'une des revendications 1 à 5, dans lequel, le deuxième moule (2') comprenant une deuxième empreinte (8'), ledit système de fabrication (1) comprenant un deuxième contre-moule (3') monté entre l'organe de pression gonflable (6) et le deuxième moule (2'), l'organe de pression gonflable (6) est configuré pour, dans son état contraint, plaquer à la fois une première pièce d'ébauche (P) entre le premier contre-moule (3) et le premier moule (2) et une deuxième pièce d'ébauche (P') entre ledit deuxième contre-moule (3') et le deuxième moule (2') de manière à permettre la fabrication simultanée de deux pièces thermoplastiques structurelles (100, 100').

7. Système selon l'une des revendications 1 à 6, dans lequel, le premier contre-moule (3) comporte une première partie et une deuxième partie qui sont reliées par des moyens de réglage de l'écartement, de préférence, une portion flexible (34).

8. Système selon l'une des revendications 1 à 7, dans lequel l'organe de pression gonflable (6) comprend, à l'état de repos, au moins un pli intérieur (65).

9. Système selon l'une des revendications 1 à 8, dans lequel le premier contre-moule (3) est réalisé dans un matériau ayant un coefficient de dilatation thermique qui est analogue à celui de la pièce d'ébauche (P).

10. Procédé de fabrication par le système de fabrication (1) selon l'une des revendications 1 à 9 d'une pièce thermoplastique structurelle (100) à partir d'une pièce d'ébauche (P), la pièce d'ébauche (P) étant positionnée entre l'empreinte (8) du premier moule (2) et l'empreinte (9) du premier contre-moule (3), l'organe de pression gonflable (6) étant dans un état dégonflé de repos, ledit procédé comprend :
- une étape de chauffage de la matrice thermoplastique de la pièce d'ébauche (P) de manière à la rendre malléable et
- une étape de gonflage de l'organe de pression gonflable (6) dans un état gonflé de contrainte dans lequel l'organe de pression gonflable (6) plaque la pièce d'ébauche (P) entre l'empreinte (8) du premier moule (2) et l'empreinte (9) du premier contre-moule (3) de manière à consolider la pièce d'ébauche (P) et former la pièce thermoplastique structurelle (100).

## Patentansprüche

1. System zur Herstellung (1) von mindestens einem thermoplastischen Strukturteil (100), das bestimmt ist, in eine primäre Struktur eines Flugzeugs integriert zu sein, wobei das thermoplastische Strukturteil (100) aus einem Rohteil (P) gebildet ist, das in eine thermoplastische Matrix eingelassene Verstärkungsfasern aufweist, wobei das herzustellende thermoplastische Strukturteil (100) eine äußere Seite (100b) und eine innere Seite (100a), die der äußeren Seite (100b) gegenüberliegt, umfasst, wobei das Herstellungssystem (1) umfasst:
- eine erste Form (2), umfassend einen inneren Formenhohlraum (8), der bestimmt ist, die äußere Seite (100b) des herzustellenden thermoplastischen Teils (100) zu bilden,
- eine erste Gegenform (3), umfassend einen äußeren Formenhohlraum (9), der bestimmt ist, die innere Seite (100a) des herzustellenden thermoplastischen Teils (100) zu bilden, wobei das Rohteil (P) bestimmt ist, zwischen der ersten Form (2) und der ersten Gegenform (3) angebracht zu sein,
- eine zweite Form (2'), die ausgelegt ist, um gegenüber der ersten Form (2) angebracht zu sein,
- eine Vorrichtung (11) zum Verschließen der Formen (2, 2') derart, dass ihre Beabstandung untersagt ist,
- eine Heizvorrichtung des Rohteils (P) auf eine Heiztemperatur über der Schmelztemperatur der thermoplastischen Matrix derart, dass sie formbar wird,
- mindestens ein aufblasbares Druckorgan (6), das aus einem Material hergestellt ist, das eine Temperaturbeständigkeit über der Heiztemperatur hat, wobei das aufblasbare Druckorgan (6) zwischen der ersten Gegenform (3) und der zweiten Form (2') angebracht ist,
- wobei das aufblasbare Druckorgan (6) ausgelegt ist, um sich zwischen einem unaufgeblasenen Ruhezustand und einem aufgeblasenen Beanspruchungszustand zu entwickeln, wobei das aufblasbare Druckorgan (6) in dem aufgeblasenen Beanspruchungszustand ausgelegt ist, um das Rohteil (P) zwischen dem Formenhohlraum (8) der ersten Form (2) und dem Formenhohlraum (9) der ersten Gegenform (3) derart anzudrücken, dass das Rohteil (P) konsolidiert und das thermoplastische Strukturteil (100) gebildet wird.

2. System nach Anspruch 1, wobei der Formenhohlraum (8) der ersten Form (2) eine Länge über 5 m besitzt.

3. System nach einem der Ansprüche 1 und 2, wobei das aufblasbare Druckorgan (6) ausgelegt ist, um einer Heiztemperatur von mindestens gleich 350 °C, vorzugsweise mindestens gleich 600 °C, zu widerstehen.

4. System nach einem der Ansprüche 1 und 3, wobei das aufblasbare Druckorgan (6) aus einem Material vom Typ Polyimid oder Silicon hergestellt ist.

5. System nach einem der Ansprüche 1 und 4, wobei das aufblasbare Druckorgan (6) auf einen Innendruck zwischen 1 bar (1.000 hPa) und 15 bar (15.000 hPa), vorzugsweise zwischen 7 bar (7.000 hPa) und 12 bar (12.000 hPa), aufgeblasen wird.

6. System nach einem der Ansprüche 1 bis 5, wobei, wobei die zweite Form (2') einen zweiten Formenhohlraum (8') umfasst, das Herstellungssystem (1) eine zweite Gegenform (3') umfasst, die zwischen dem aufblasbaren Druckorgan (6) und der zweiten Form (2') angebracht ist, das aufblasbare Druckorgan (6) ausgelegt ist, um in seinem beanspruchten Zustand gleichzeitig ein erstes Rohteil (P) zwischen der ersten Gegenform (3) und der ersten Form (2) und ein zweites Rohteil (P') zwischen der zweiten Gegenform (3') und der zweiten Form (2') derart anzudrücken, dass die gleichzeitige Herstellung von zwei thermoplastischen Strukturteilen (100, 100') gestattet ist.

7. System nach einem der Ansprüche 1 bis 6, wobei die erste Gegenform (3) einen ersten Teil und einen zweiten Teil aufweist, die durch Stellmittel der Beabstandung, vorzugsweise einen flexiblen Abschnitt (34), verbunden sind.

8. System nach einem der Ansprüche 1 bis 7, wobei das aufblasbare Druckorgan (6) in dem Ruhestand mindestens eine Innenfalte (65) umfasst.

9. System nach einem der Ansprüche 1 bis 8, wobei die erste Gegenform (3) aus einem Material hergestellt ist, das einen thermischen Ausdehnungskoeffizienten hat, der analog zu dem des Rohteils (P) ist.

10. Verfahren zur Herstellung, durch das Herstellungssystem (1) nach einem der Ansprüche 1 bis 9, eines thermoplastischen Strukturteils (100) aus einem Rohteil (P), wobei das Rohteil (P) zwischen dem Formenhohlraum (8) der ersten Form (2) und dem Formenhohlraum (9) der ersten Gegenform (3) positioniert ist, wobei das aufblasbare Druckorgan (6) in einem unaufgeblasenen Ruhezustand ist, wobei das Verfahren umfasst:
- einen Heizschritt der thermoplastischen Matrix des Rohteils (P) derart, dass es formbar wird, und
- einen Aufblasschritt des aufblasbaren Druckorgans (6) in einen aufgeblasenen Beanspruchungszustand, in dem das aufblasbare Druckorgan (6) das Rohteil (P) zwischen dem Formenhohlraum (8) der ersten Form (2) und dem Formenhohlraum (9) der ersten Gegenform (3) derart andrückt, dass das Rohteil (P) konsolidiert und das thermoplastische Strukturteil (100) gebildet wird.

## Claims

1. A system for manufacturing (1) at least one structural thermoplastic piece (100), for being integrated into a primary structure of a plane, said structural thermoplastic piece (100) being formed from a blank (P) comprising reinforcing fibres embedded in a thermoplastic matrix, the structural thermoplastic piece (100) to be manufactured comprising an external face (100b) and an internal face (100a), opposite to the external face (100b), the manufacturing system (1) comprising:
- a first mould (2), comprising an internal cavity (8) for forming the external face (100b) of the thermoplastic piece to be manufactured (100),
- a first counter-mould (3) comprising an external cavity (9) for forming the internal face (100a) of the thermoplastic piece to be manufactured (100), the blank (P) being to be mounted between the first mould (2) and the first counter-mould (3),
- a second mould (2') configured to be mounted facing the first mould (2),
- a device for closing (11) the moulds (2, 2') so as to prohibit spacing thereof,
- a device for heating the blank (P) to a heating temperature greater than the melting temperature of the thermoplastic matrix so as to make it malleable,
- at least one inflatable pressure member (6) made of a material having a thermal resistance greater than the heating temperature, the inflatable pressure member (6) being mounted between the first counter-mould (3) and the second mould (2'),
- the inflatable pressure member (6) being configured to move between a deflated rest state and an inflated stress state in which the inflatable pressure member (6) is configured to press the blank (P) between the cavity (8) of the first mould (2) and the cavity (9) of the first counter-mould (3) so as to strengthen the blank (P) and form the structural thermoplastic piece (100).

2. The system according to claim 1, wherein the cavity (8) of the first mould (2) comprises a length greater than 5m.

3. The system according to one of claims 1 and 2, wherein the inflatable pressure member (6) is configured to withstand a heating temperature at least equal to 350°C, preferably, at least equal to 600°C.

4. The system according to one of claims 1 and 3, wherein the inflatable pressure member (6) is made of a polyimide or silicone type material.

5. The system according to one of claims 1 and 4, wherein the inflatable pressure member (6) is inflated to an internal pressure between 1 bar (1 0010hPa) and 15 bar (15 000hPa), preferably, between 7 bar (7 100hPa) and 12 bar (12 000hPa).

6. The system according to one of claims 1 to 5, wherein, the second mould (2') comprising a second cavity (8'), said manufacturing system (1) comprising a second counter-mould (3') mounted between the inflatable pressure member (6) and the second mould (2'), the inflatable pressure member (6) is configured to, in its stressed state, press both a first blank (P) between the first counter-mould (3) and the first mould (2) and a second blank (P') between said second counter-mould (3') and second mould (2') so as to allow simultaneous manufacture of two structural thermoplastic pieces (100, 100').

7. The system according to one of claims 1 to 6, wherein the first counter-mould (3) comprises a first part and a second part which are connected by spacing adjusting means, preferably, a flexible portion (34).

8. The system according to one of claims 1 to 7, wherein the inflatable pressure member (6) comprises, in the rest state, at least one internal fold (65).

9. The system according to one of claims 1 to 8, wherein the first counter-mould (3) is made of a material having a thermal expansion coefficient which is analogous to that of the blank (P).

10. A method for manufacturing a structural thermoplastic piece (100) by the manufacturing system (1) according to one of claims 1 to 9 from a blank (P), the blank (P) being positioned between the cavity (8) of the first mould (2) and the cavity (9) of the first counter-mould (3), the inflatable pressure member (6) being in a deflated rest state, said method comprises:
- a step of heating the thermoplastic matrix of the blank (P) so as to make it malleable and
- a step of inflating the inflatable pressure member (6) into an inflated stress state in which the inflatable pressure member (6) presses the blank (P) between the cavity (8) of the first mould (2) and the cavity (9) of the first counter-mould (3) so as to strengthen the blank (P) and form the structural thermoplastic piece (100).
